# DEMANDE DE BREVET EUROPEEN

(11) **EP 4 642 108 A2**
(43) Date de publication de la demande: **29.10.2025**
(21) Numéro de dépôt: 25202194.4
(22) Date de dépôt: 25.09.2013
(51) Int. Cl.: H04W 52/02

(54) **MISE EN VEILLE D'UN ÉQUIPEMENT CONNECTÉ À UN RÉSEAU À LIENS MULTIPLES**

(30) Priorité: 28.09.2012 FR 1259233
(62) Demande divisionnaire de: 13779296.6
(71) Demandeur: Orange, 92130 Issy-les-Moulineaux (FR)
(72) Inventeur: PAGANI, Pascal, 22200 GUINGAMP (FR)
(74) Mandataire: Regimbeau

(57) **Abrégé**

L'invention concerne un procédé de gestion de la mise en veille d'un équipement de communication (CPL2) impliqué dans une pluralité de connexions entre équipements terminaux (IAD, STB, PC) d'un réseau de communication, le procédé comprenant les étapes suivantes :
- détecter le passage d'une desdites connexions d'un état actif, dans lequel des données sont transmises au moyen de ladite connexion, à un état inactif, dans lequel aucune donnée n'est transmise au moyen de ladite connexion ;
- maintenir l'équipement de communication en éveil si au moins une autre desdites connexions se trouve dans un état actif ;
- mettre en veille l'équipement de communication si aucune desdites connexions ne se trouve dans un état actif.

## Description

### DOMAINE DE L'INVENTION

L'invention concerne le domaine des télécommunications et plus particulièrement la mise en veille d'un équipement de communication connecté à un réseau, en particulier un réseau local domestique, lorsque ce réseau est composé de liens multiples, l'équipement de communication pouvant être impliqué dans une pluralité de connexions entre équipements terminaux du réseau.

### ARRIERE PLAN DE L'INVENTION

Le document US 2007/0066329 A1 décrit un procédé pour faire fonctionner une station de base dans un mode de fonctionnement actif et dans un mode de fonctionnement de veille d'émission.

Le document US20080219214_A1 décrit un procédé de gestion d'une station de relais à multiples sauts pour une utilisation dans un réseau de communication sans fil étendu, prévoyant de déterminer qu'aucune station mobile n'est desservie par la station de relais, désactiver la station de relais; laisser un récepteur actif; et surveiller des signaux sur le récepteur actif.

Le document décrit WO 2011/124853 A1 décrit un procédé de contrôle d'une passerelle domestique, destinée à connecter au moins un terminal domestique d'un réseau domestique informatique à un réseau de télécommunication, la passerelle domestique comportant un point d'accès configuré pour établir une connexion entre ledit terminal domestique et la passerelle domestique, procédé comprenant: une étape de vérification de l'état de la connexion entre la passerelle domestique et ledit terminal domestique via le point d'accès, et une étape de mise en veille cyclique dudit point d'accès si ladite connexion est inactive, dans laquelle le point d'accès est alternativement allumé pendant une durée d'activité et éteint pendant une durée de sommeil.

Le document EP 2 362 697 A1 décrit un procédé permettant de contrôler un mode d'économie d'énergie d'un noeud de réseau dans un réseau de télécommunications sans fil. Le noeud de réseau permet de communiquer avec au moins un ensemble de matériel d'utilisateur. L'équipement d'utilisateur permet de passer d'un mode actif dans lequel les communications avec le noeud de réseau peuvent avoir lieu et un mode inactif dans lequel l'équipement d'utilisateur est inactif. Le procédé comporte les étapes consistant à : déterminer lorsque chaque équipement d'utilisateur dans l'ensemble passe en mode actif pour communiquer avec le noeud de réseau ; et la commutation du noeud de réseau depuis un état inactif dans lequel le noeud de réseau est inactif à un état actif, dans lequel les communications avec le matériel d'utilisateur peuvent avoir lieu, lorsque un matériel d'utilisateur dans l'ensemble est en mode actif.

La mise en veille d'un équipement de communication consiste à le faire passer d'un mode éveillé, où l'équipement dispose de toutes ses fonctionnalités et génère une consommation électrique nominale, à un mode de veille dans lequel l'équipement consomme relativement peu d'énergie aux prix de fonctionnalités réduites.

Classiquement, la mise en veille d'un équipement de communication se fait de manière autonome. L'équipement de communication suit une procédure interne généralement liée à une temporisation : lorsque cet équipement de communication ne reçoit plus de messages ou de signal sur un ou plusieurs de ses ports de communication pendant une durée prédéterminée, il se met automatiquement en veille.

Cependant, une problématique se rencontre lorsque le réseau local auquel appartient l'équipement de communication est composé de liens multiples. Plus précisément, cette problématique est identifiée dans le cas où une communication de données entre équipements terminaux (typiquement d'un équipement source vers un équipement destinataire du réseau local) transite d'une manière ou d'une autre par au moins un équipement intermédiaire.

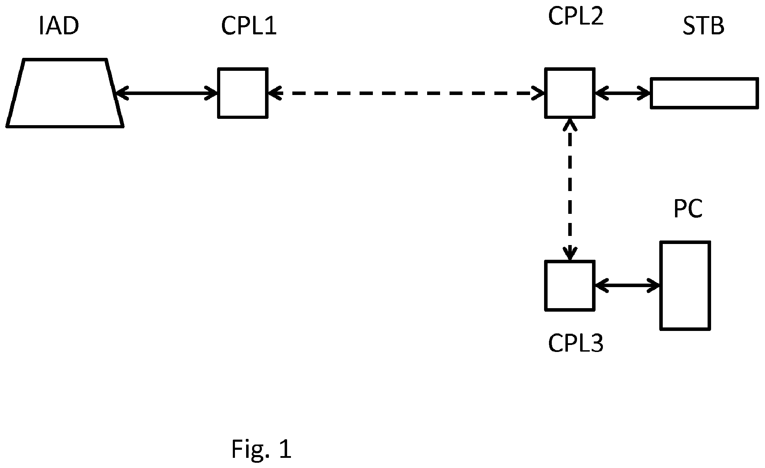

On a représenté sur la **figure 1** un exemple de réseau local à liens multiples qui permet d'illustrer cette problématique. Il s'agit d'un réseau local domestique composé d'une passerelle d'accès à Internet IAD (« Integrated Access Device »), du type de celles proposées par les fournisseurs d'accès à Internet et communément appelés « box », d'un décodeur multimedia STB (« Set-Top Box ») également mis à la disposition des clients des fournisseurs d'accès à Internet et qui offre notamment des services de télévision IP ou de vidéo à la demande, et d'un ordinateur personnel PC. Ces équipements sont reliés entre eux par des modems à courant porteurs en ligne CPL1, CPL2, CPL3. Sur la figure 1, les traits pleins représentent un lien Ethernet tandis que les traits pointillés illustrent un lien par courant porteurs en ligne via le réseau électrique domestique. Ainsi, la communication est possible entre les modems CPL1 et CPL2, ainsi qu'entre les modems CPL2 et CPL3. Cependant, les conditions de propagation du signal ne permettent pas la communication directe entre les modems CPL1 et CPL3. Pour transmettre des données entre la passerelle d'accès à Internet IAD et l'ordinateur personnel PC, le signal est transmis successivement du modem CPL1 au modem CPL2, puis du modem CPL2 au modem CPL3, le modem CPL2 servant ici de relais.

Certains des modems à courants porteurs en ligne disponibles commercialement se mettent en veille dès lors que leur port Ethernet ne reçoit ou n'émet plus d'information pendant une durée prédéterminée. Dans un fonctionnement nominal, la passerelle d'accès à Internet IAD transmet des données au décodeur multimédia STB et à l'ordinateur personnel PC. Dès lors que le décodeur multimédia STB n'est plus utilisé et passe en mode veille, son port Ethernet n'est plus actif, et donc le modem CPL2 peut être amené à se mettre en veille. Ce faisant, il coupe la communication jusque-là disponible entre la passerelle d'accès à Internet IAD et le PC. Si des données sont transmises entre la passerelle d'accès à Internet IAD et l'ordinateur personnel PC, il sera alors nécessaire d'attendre le réveil du modem CPL2, ce qui provoquera une latence importante.

De manière générale, l'inconvénient majeur de l'état de l'art de la mise en veille des équipements est qu'il se base sur l'information sur l'activité des connexions disponibles localement au niveau de chaque équipement alors que dans un réseau composé de liens multiples, un équipement de communication peut faire partie de plusieurs connexions entre équipements terminaux. Comme illustré par la figure 1, une mise en veille décidée de façon locale par un équipement peut amener cet équipement à se mettre en veille alors qu'il a toujours un rôle de relais à jouer pour une communication active. Son réveil va alors introduire une latence importante.

Une solution pour contourner ce problème consiste à utiliser des équipements intermédiaires qui ne se mettent jamais en veille. Une telle solution n'est bien entendu pas satisfaisante en termes de consommation électrique du réseau.

### EXPOSÉ DE L'INVENTION

L'invention propose de modifier le mécanisme mise en veille d'un équipement de communication afin de remédier aux inconvénients de l'état de l'art.

L'invention propose à cet effet un procédé de gestion de la mise en veille d'un équipement de communication impliqué dans une pluralité de connexions entre équipements terminaux d'un réseau de communication, le procédé comprenant les étapes suivantes :
- détecter le passage d'une desdites connexions d'un état actif, dans lequel des données sont transmises au moyen de ladite connexion, à un état inactif, dans lequel aucune donnée n'est transmise au moyen de ladite connexion ;
- maintenir l'équipement de communication en éveil si au moins une autre desdites connexions se trouve dans un état actif ;
- mettre en veille l'équipement de communication si aucune desdites connexions ne se trouve dans un état actif

Ainsi, on s'assure que toutes les connexions dans lesquelles un équipement est impliqué sont inactives avant que cet équipement ne se mette en veille. Ceci permet d'éviter la mise en veille d'équipements de communication tant qu'ils ont un rôle à jouer, notamment en tant que relais, pour une communication active, évitant ainsi la forte latence qui serait introduite par leur nécessaire réveil.

En outre par comparaison avec les solutions consistant à utiliser des équipements intermédiaires ne se mettant jamais en veille, le mécanisme de mise en veille proposé par l'invention permet au réseau de présente une meilleure efficacité énergétique. Et lorsqu'un équipement est source de rayonnement, sa mise en veille permet de réduire l'exposition des personnes aux ondes électromagnétiques.

Certains aspects préférés, mais non limitatifs, de ce procédé sont les suivants.

Le procédé peut comprendre les étapes suivantes :
- mémoriser, dans un module de mémoire, au moins une indication qu'une desdites connexions se trouve dans un état actif ;
- vérifier, suite à la détection du passage d'une desdites connexion d'un état actif à un état inactif, si le module de mémoire contient une indication qu'une autre desdites connexions se trouve dans un état actif, afin de mettre en œuvre le maintien en éveil ou la mise en veille de l'équipement de communication en fonction de la présence de ladite indication dans le module de mémoire.

Ces étapes permettent une gestion simple de la mise en veille et du maintien en éveil de l'équipement, par simple consultation d'informations mémorisées au sujet des connexions actives.

Selon un mode de réalisation où l'indication qu'une connexion se trouve dans un état actif peut comprendre un identifiant de ladite connexion, le procédé comprend, suite à la détection du passage d'une connexion d'un état actif à un état inactif, la suppression de l'identifiant de ladite connexion dans le module de mémoire. Ceci permet une prise de décision rapide, par simple consultation de la présence ou non d'un identifiant de connexion active dans un module de mémoire.

Selon un autre mode de réalisation où l'indication qu'une connexion se trouve dans un état actif peut comprendre un identifiant de ladite connexion associé à un identifiant d'état de ladite connexion, le procédé comprend, suite à la détection du passage d'une connexion d'un état actif à un état inactif, la modification de l'identifiant d'état associé à ladite connexion dans le module de mémoire. Ceci permet de conserver en mémoire l'identifiant de chacune des connexions qui sont devenues actives, afin de faciliter l'éventuel retour à l'état actif de l'une de ces connexions inactives.

La mémorisation d'une indication qu'une connexion se trouve dans un état actif peut avantageusement faire suite à la détection du passage de ladite connexion d'un état inactif à un état actif, afin de permettre le maintien à jour des informations de connexions actives mémorisées.

Dans un mode de réalisation, la détection du passage d'une desdites connexions d'un état actif à un état inactif, respectivement d'un état inactif à un état actif, peut comprendre la réception d'un message de mise en veille, respectivement d'un message de réveil, provenant d'un des équipements impliqués dans ladite connexion. Ceci permet de faire basculer une connexion d'un état actif vers un état inactif, ou vice versa, dès qu'un des équipements de cette connexion change d'état et le signale, sans avoir à surveiller la transmission de données sur cette connexion.

Dans un autre mode réalisation, la détection du passage d'une desdites connexions d'un état actif à un état inactif, respectivement d'un état inactif à un état actif, comprend la détection de l'absence, respectivement de la présence, de transmission de données sur ladite connexion pendant une période de surveillance d'activité, ce qui permet de réaliser une gestion de la mise en veille ne nécessitant pas l'utilisation de messages de signalisation supplémentaires en provenance des autres équipements de cette connexion.

Selon un mode de réalisation, la détection du passage d'une desdites connexions d'un état actif à un état inactif et/ou d'un état inactif à un état actif peut notamment être réalisée par l'équipement de communication. Ceci permet de réaliser une gestion purement locale, de manière autonome, de la mise en veille au niveau de l'équipement de communication lui-même.

Alternativement, la détection du passage d'une desdites connexions d'un état actif à un état inactif et/ou d'un état inactif à un état actif peut être réalisée par un équipement distant de surveillance d'activité, le procédé comprenant en outre la transmission d'un message d'instruction dudit équipement distant de surveillance d'activité vers l'équipement de communication, l'équipement de communication étant maintenu en éveil ou mis en veille en fonction dudit message d'instruction. La décision de maintenir éveillé ou de mettre en veille l'équipement de communication est ainsi prise à distance, par exemple au moyen d'un équipement centralisé disposant de toutes les informations sur les états d'activité respectifs des différentes connexions dans le réseau de communication.

L'invention n'est par ailleurs pas limitée au procédé de gestion de mise en veille présenté ci-dessus, mais s'étend également à un équipement de communication apte à être impliqué dans une pluralité de connexions entre équipements terminaux d'un réseau de communication, comprenant un module de surveillance d'activité des connexions configuré pour, après détection du passage d'une desdites connexions d'un état actif, dans lequel des données sont transmises par ladite connexion, à un état inactif, dans lequel aucune données n'est transmise par ladite connexion :
- maintenir l'équipement de communication en éveil si au moins une desdites connexions reste dans un état actif ;
- déclencher la mise en veille de l'équipement de communication si aucune desdites connexions ne se trouve dans un état actif.

Cet équipement de communication peut notamment comprendre un module de mémoire configuré pour mémoriser au moins une indication qu'une desdites connexions se trouve dans un état actif, le module de surveillance d'activité des connexions étant alors configuré en outre pour vérifier, suite à la détection du passage d'une desdites connexions d'un état actif à un état inactif, si le module de mémoire contient une indication qu'une autre desdites connexions se trouve dans un état actif, afin de mettre en œuvre le maintien en éveil ou la mise en veille de l'équipement de communication en fonction de la présence de ladite indication dans le module mémoire.

Selon un mode de réalisation particulier, l'indication qu'une desdites connexions se trouve dans un état actif comprend un identifiant de la connexion, le cas échéant associé à un identifiant d'état de la connexion, en particulier une liste ordonnée des identifiants des équipements appartenant à ladite connexion, dans un ordre allant d'un premier équipement dit équipement source à un deuxième équipement dit équipement destinataire.

Selon un autre mode de réalisation, le module de surveillance d'activité des connexions est apte à recevoir un message d'instruction d'un équipement distant de surveillance d'activité et configuré pour maintenir en éveil ou mettre en veille l'équipement de communication en fonction dudit message d'instruction.

L'invention s'étend également à un produit programme d'ordinateur comprenant des instructions de code pour l'exécution, lorsque ce produit programme est exécuté par un processeur d'un équipement de communication, du procédé de gestion de mise en veille présenté ci-dessus.

### BREVE DESCRIPTION DES DESSINS

D'autres aspects, buts et avantages de la présente invention apparaîtront mieux à la lecture de la description détaillée suivante de formes de réalisation préférées de celle-ci, donnée à titre d'exemple non limitatif, et faite en référence aux dessins annexés sur lesquels:
- la figure 1, déjà discutée précédemment, représente un réseau domestique à liens multiples ; et
- la figure 2 illustre les étapes d'un procédé de gestion de la mise en veille d'un équipement de communication selon un mode de réalisation possible de l'invention.

### DESCRIPTION DETAILLEE DE L'INVENTION

L'invention concerne un procédé de gestion de la mise en veille d'un équipement de communication connecté à un réseau de communication, par exemple un réseau local (LAN en anglais), et notamment un réseau à liens multiples dans lequel l'équipement est impliqué dans plusieurs connexions entre équipements terminaux du réseau. Dans le cas particulier d'un réseau local ou domestique, on entend par équipement terminal tout équipement capable de traiter des données numériques et destiné à être utilisé par un utilisateur via une interface utilisateur, comme par exemple une passerelle d'accès d'un réseau domestique, un décodeur numérique, un ordinateur, un téléphone portable, un smartphone, une imprimante, entre autres.

On se réfère à nouveau à la **figure 1** qui illustre un exemple d'un tel réseau domestique à liens multiples, dans lequel est mise en œuvre l'invention. Ce réseau est ici constitué de deux connexions entre équipements terminaux:
- une première connexion « IAD-CPL1-CPL2-STB » reliant la passerelle d'accès à Internet IAD au décodeur multimédia STB via les modems CPL1 et CPL2,
- une deuxième connexion « IAD-CPL » reliant la passerelle d'accès à Internet IAD à l'ordinateur personnel PC via les modems CPL1, CPL2 et CPL3.

Dans le contexte de la présente invention, une connexion entre équipements terminaux est définie par un premier équipement terminal, dit équipement source, un deuxième équipement terminal, dit équipement destinataire et l'ensemble des équipements relais intermédiaires utilisés pour que l'équipement source puisse communiquer avec l'équipement destinataire dans le réseau.

Une connexion entre équipements terminaux peut notamment appartenir à un réseau de communication local. Ainsi, dans le réseau illustré à la figure 1, l'équipement terminal de communication que constitue la passerelle d'accès à internet IAD, ainsi que les équipements relais de communication que constituent les modems CPL1 et CPL2, sont impliqués dans deux connexions différentes. En d'autres termes, deux connexions distinctes transitent par ces équipements de communication (le terme « transiter » s'appliquant aussi bien à un équipement relais qu'à un équipement terminal de cette connexion), ces connexions pouvant se trouver dans un état actif ou inactif indépendamment l'une de l'autre.

Dans le cadre de la présente description, une connexion entre équipements terminaux est ainsi déterminée comme étant dans un état actif, dans un premier temps, lorsque la transmission de données est détectée sur cette connexion.

Inversement, une connexion entre équipements terminaux est déterminée comme étant dans un état inactif (c'est-à-dire passant d'un état actif à un état inactif quand cette connexion est initialement considérée comme active) lorsqu'aucune données n'est transmise au moyen de ladite connexion pendant un certain temps, par exemple pendant une période de surveillance d'activité dont la durée peut être de l'ordre de 1 minute, à titre d'exemple non limitatif.

Selon l'invention, c'est l'état actif ou inactif d'une connexion entre équipements terminaux transitant par un équipement de communication qui est considéré avant que cet équipement de communication ne se mette en veille. Lorsqu'une connexion entre équipements terminaux n'est plus active, les équipements faisant partie de cette connexion entre équipements terminaux ne peuvent se mettre en veille qu'à condition qu'ils ne fassent partie d'aucune autre connexion active du réseau.

Pour ce faire, la mise en veille d'un équipement de communication de ce réseau est gérée de sorte à détecter qu'une connexion entre équipements terminaux dans laquelle l'équipement est impliqué passe de l'état actif à l'état inactif.

Lorsqu'un tel changement d'état de cette connexion est détecté, l'équipement de communication est maintenu en éveil si au moins une autre des connexions entre équipements terminaux transitant par cet équipement de communication se trouve dans un état actif.

Si par contre aucune des connexions entre équipements terminaux transitant par l'équipement de communication ne se trouve dans un état actif après qu'on ait détecté ce changement d'état (ce qui signifie que la connexion devenue inactive était la dernière connexion active transitant par cet équipement de communication), l'équipement de communication peut être mis en veille.

Pour permettre cette détection, un mode de réalisation consiste à associer à un ou plusieurs équipement de communication du réseau dont la mise en veille est à gérer, voire à l'ensemble des équipements de communication du réseau, un module de mémoire dans lequel on vient mémoriser, pour chacune des connexions actives entre équipements terminaux transitant par cet équipement de communication, une indication que cette connexion se trouve dans un état actif. En particulier, ce module de mémoire peut être installé dans l'équipement de communication dont la mise en veille est à gérer proprement dit, par exemple dans un équipement relais de communication CPL1 ou CPL2.

En variante, ce module de mémoire peut être un module d'un équipement éventuellement distinct de l'équipement de communication dont la mise en veille est à gérer dans le réseau, que l'on peut appeler équipement de surveillance d'activité, par exemple un module de la passerelle d'accès à Internet IAD dans l'exemple de la figure 1, cet équipement de surveillance d'activité jouant alors le rôle d'un coordinateur central pour la gestion des informations sur les états d'activité des différentes connexions entre équipements terminaux du réseau et la mise en œuvre du procédé de gestion de la mise en veille d'un équipement du réseau.

Ainsi, suite à la détection du passage à l'état inactif d'une connexion entre équipements terminaux dans laquelle un équipement est impliqué, on vérifie si le module de mémoire contient une indication qu'une autre des connexions entre équipements terminaux dans laquelle l'équipement est impliqué se trouve dans un état actif. Si c'est le cas, l'équipement est maintenu en éveil. Dans le cas contraire, l'équipement est mis en veille.

En particulier, l'indication qu'une connexion entre équipements terminaux dans laquelle l'équipement est impliqué est dans un état actif peut être un identifiant de cette connexion. Dans ce cas, suite à la détection du passage à l'état inactif de cette connexion, l'identifiant de cette connexion est supprimé dans le module de mémoire. La mise en veille de l'équipement de communication n'a alors lieu que lorsqu'aucun identifiant de connexion n'est mémorisé dans le module de mémoire.

En variante, l'indication qu'une connexion entre équipements terminaux dans laquelle l'équipement est impliqué est dans un état actif peut être un identifiant de cette connexion associé à un identifiant d'état de cette connexion (« actif » ou « inactif »). Dans ce dernier cas, suite à la détection du passage à l'état inactif d'une connexion, l'identifiant d'état associé à cette connexion est modifié conformément dans le module de mémoire, sans supprimer l'identifiant de cette connexion, afin de conserver la connaissance des connexions déjà activées précédemment en mémoire, ce qui peut faciliter un retour ultérieur à l'état actif d'une telle connexion inactive.

Ceci est particulièrement utile dans le cas où l'équipement de communication dont la mise en veille est à gérer reçoit des messages pour identifier qu'une connexion est devenue active ou inactive en provenance d'un équipement de surveillance d'activité. Dans un tel cas, il n'est pas nécessaire d'établir à nouveau la liste des équipements pour une connexion déjà mémorisée, ce qui demanderait de refaire une analyse des messages reçus par l'équipement de communication afin de retrouver les équipements impliqués dans cette connexion.

L'identifiant d'une connexion entre équipements terminaux peut être représenté dans le module de mémoire par un ensemble d'identifiants d'équipement regroupant un identifiant de chacun des équipements qui sont impliquée dans ladite connexion, par exemple un ensemble d'adresses, en particulier l'adresse MAC (« Media Access Control ») de chacun des équipements. L'ensemble d'identifiants d'équipement peut notamment être représentée par une liste ordonnée d'identifiants répertoriant l'ensemble des équipements sur lesquels transitent des données, dans l'ordre depuis l'équipement source jusqu'à l'équipement destinataire. On relèvera que dans la pratique, une connexion entre équipements terminaux est généralement utilisée pour une communication de données bidirectionnelle entre équipement source et équipement destinataire, si bien qu'une telle connexion peut être représentée de manière équivalente par une liste d'identifiants ou la même liste dans l'ordre inverse.

Ainsi, en reprenant l'exemple de la figure 1 et en utilisant des identifiants de connexion constitués de listes ordonnées d'identifiants d'équipements, le module de mémoire associé à chacun des équipements peut ainsi contenir les informations suivantes, lorsque les deux connexions sont actives :

| Equipement | identifiants des connexions actives entre équipements terminaux, dans lesquelles l'équipement est impliqué |
|---|---|
| IAD | LB-CPL1-CPL2-STB |
| | LB-CPL1-CPL2-CPL3-PC |
| CPL1 | LB-CPL1-CPL2-STB |
| | LB-CPL1-CPL2-CPL3-PC |
| CPL2 | LB-CPL1-CPL2-STB |
| | LB-CPL1-CPL2-CPL3-PC |
| CPL3 | LB-CPL1-CPL2-CPL3-PC |
| STB | LB-CPL1-CPL2-STB |
| PC | LB-CPL1-CPL2-CPL3-PC |

En pratique, afin de pouvoir gérer la mise en veille d'un équipement de communication du réseau, celui-ci comporte un module de surveillance d'activité des connexions configuré pour, après détection qu'une des connexions dans lesquelles cet équipement est impliqué passe d'un état actif à un état inactif, maintenir cet équipement en éveil si au moins une autre de ces connexions reste dans un état actif ou déclencher la mise en veille de cet équipement si, au contraire, plus aucune des ces connexions ne se trouve dans un état actif.

Le module de surveillance d'activité des connexions peut en outre être configuré pour détecter qu'une connexion entre équipements terminaux dans laquelle il est impliquée devient active ou inactive. Ce module met alors à jour le module de mémoire de l'équipement, par exemple pour y supprimer l'identifiant de la connexion devenue inactive, ou au contraire ajouter cet identifiant lorsque cette connexion est devenue active, ou encore modifier l'identifiant d'état de la connexion.

Lorsque l'équipement de communication dispose en local du module de mémoire décrit précédemment, le module de surveillance d'activité des connexions est en outre configuré pour vérifier, suite à la détection du passage d'une des connexions transitant par cet équipement d'un état actif à un état inactif, si le module de mémoire contient une indication qu'une autre des connexions se trouve dans un état actif, afin de mettre en œuvre le maintien en éveil ou la mise en veille de l'équipement. Alternativement, c'est un équipement coordinateur central qui est chargé de maintenir à jour les modules de mémoire des différents équipements du réseau dont la mise en veille est gérée.

Ainsi, lorsqu'une nouvelle connexion entre équipements terminaux dans laquelle un équipement est impliqué devient active, l'identifiant de cette nouvelle connexion est ajoutée dans le module de mémoire associé à l'équipement de communication. Une nouvelle connexion active entre équipements terminaux peut notamment être détectée par la réception d'un message, par exemple un message émis par un équipement source ou un message émis par un équipement distant de surveillance d'activité.

Dans un mode de réalisation, un équipement de communication détecte la transmission de données à travers la connexion, par exemple pendant une période de surveillance d'activité. Lorsqu'un message est transmis d'un équipement source vers un équipement destinataire en empruntant un ou plusieurs équipements intermédiaires, le message contient nécessairement une liste d'identifiants successifs d'équipements pour la transmission. A la réception d'un tel message, cet équipement consulte cette liste d'identifiants et peut la mémoriser dans son module de mémoire si elle n'est pas déjà connue. Dans un autre mode de réalisation, un équipement, par exemple l'équipement source, publie vers l'ensemble des équipements concernés un message d'établissement de connexion informant de l'établissement d'une nouvelle connexion entre équipements terminaux active. Il s'agit d'un message protocolaire, de niveau MAC par exemple.

Dans d'autres modes de réalisation où l'on a recours à un équipement distant de surveillance d'activité, ce dernier peut être avisé de la réception, par un équipement du réseau, d'un message émis par l'équipement source, ou encore directement recevoir un message d'établissement de connexion émis par l'équipement source d'information de l'établissement d'une nouvelle connexion. L'équipement distant de surveillance d'activité transmet ensuite un message d'instruction à l'ensemble des équipements impliqués dans la connexion passée à l'état actif. La réception de ce message d'instruction permet aux équipements de détecter le passage de la connexion de l'état inactif à l'état actif.

La détection qu'une connexion entre équipements terminaux devient inactive peut comprendre la détection de messages, par exemple un message émis par la source ou un message émis par un équipement distant de surveillance d'activité.

En particulier, il est possible de détecter l'absence de transmission de données sur une connexion pendant une période de surveillance d'activité qui peut, ou non, être la même que celle observée pour détecter l'activité d'une connexion. Notamment, chaque équipement peut suivre l'activité d'une connexion en vérifiant l'occurrence de trames de données empruntant cette connexion. Lorsqu'aucun paquet n'est transmis de l'équipement source vers l'équipement destinataire en utilisant une certaine connexion pendant cette période de surveillance d'activité, cette connexion est réputée inactive. Une uniformisation des durées des périodes de surveillance d'activité pour l'ensemble des équipements du réseau peut être mise en œuvre de façon à éviter des inconsistances entre les informations mémorisées dans les différents modules de mémoire associés aux différents équipements.

Dans un autre mode de réalisation, l'équipement source ou l'équipement destinataire d'une connectivité diffuse, par exemple lorsqu'il se met en veille, vers l'ensemble des équipements concernés un message de rupture de connexion informant du passage en mode inactif de ladite connectivité. Il s'agit d'un message protocolaire, de niveau MAC par exemple. Dans d'autres modes de réalisation où l'on a recours à un équipement distant de surveillance d'activité, ce dernier peut être avisé de la détection, par un équipement du réseau, de l'absence de données transitant sur une connectivité, ou encore directement recevoir un message de rupture de connexion émis par l'équipement source ou l'équipement destinataire. L'équipement distant de surveillance d'activité transmet ensuite un message d'instruction à l'ensemble des équipements impliqués dans la connexion passée à l'état inactif. La réception de ce message d'instruction permet aux équipements de détecter le passage de la connexion de l'état actif à l'état inactif.

Une application de l'invention au réseau de la figure 1 peut être la suivante. On notera que l'on prend ici l'exemple du recours aux messages protocolaires présentés ci-dessus, mais il est bien entendu que le même résultat serait atteint si les autres modes de réalisation présentés ci-dessus devaient être mis en œuvre.

Si le décodeur multimédia STB se met en veille, il transmet un message aux modems CPL2, CPL1 et à la passerelle d'accès à internet IAD pour les informer que la première connexion « LB-CPL1-CPL2-STB » devient inactive. Comme ces trois équipements font tous partie d'une autre connexion active, ils ne se mettent pas en veille à ce stade.

Si en revanche, c'est l'ordinateur personnel PC qui se met en veille, il transmet un message aux modems CPL3, CPL2, CPL1 et à la passerelle d'accès à internet IAD pour les informer que la connexion « LB-CPL1-CPL2-CPL3-PC » devient inactive. Le module de mémoire associé au modem CPL3 est alors mis à jour, par exemple pour y supprimer l'identifiant de cette connexion. Le module de mémoire ne comportant plus d'entrée correspondant à une connexion active, le modem CPL3 peut alors se mettre en veille.

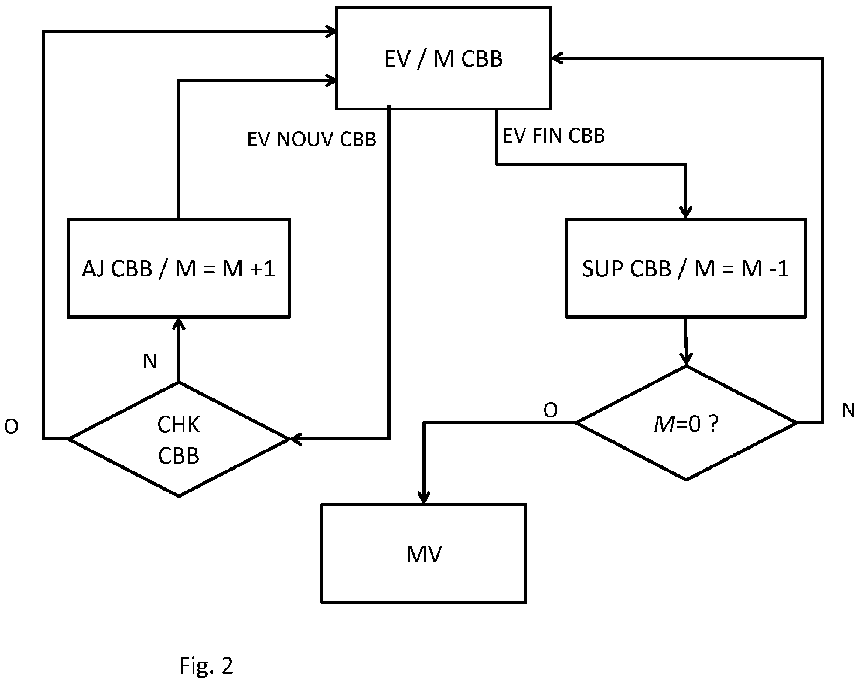

On a représenté sur la **figure 2** un diagramme de décision représentant une mise en œuvre possible de l'invention par un équipement de communication du réseau dont la mise en veille est gérée selon le procédé de la présente invention.

Dans un premier état « EV / M CBB », cet équipement de communication se trouve dans un état éveillé et est impliqué dans M connexions actives entre équipements terminaux du réseau.

L'événement « EV FIN CBB » signifie qu'une connexion entre équipements terminaux dans laquelle l'équipement est impliqué est devenue inactive. Après qu'un tel événement « EV FIN CBB » ait été détecté (soit par l'équipement lui-même, soit par un équipement distinct de surveillance d'activité), on procède alors à l'opération « SUP CBB / M=M-1 » selon laquelle l'identifiant de la connexion devenue inactive est supprimé du module de mémoire de l'équipement, le nombre M de connexions actives étant réduit d'une unité.

Suite à la détection de l'événement « EV FIN CBB » et à l'opération de suppression « SUP CBB / M=M-1 », on procède ensuite à une opération « M=0 ? » consistant à vérifier si le module de mémoire contient une indication qu'une autre des connexions impliquant cet équipement se trouve dans l'état actif.

Si le module de mémoire contient une telle indication (cas « N »), l'équipement demeure dans l'état éveillé « EV / M CBB ».

Si, par contre, le module de mémoire ne contient pas une telle indication (cas « O »), l'équipement est mis en veille et passe dans l'état « MV ». Avant de se mettre en veille, l'équipement transmet un message de rupture de connexion à destination des équipements appartenant à la ou les dites connexions dans lesquelles ledit équipement est impliqué, afin de les informer.

Dans un autre cas de figure, en repartant du premier état « EV / M CBB », l'événement « EV NOUV CBB » signifie qu'une connexion entre équipements terminaux dans laquelle l'équipement dont la mise en veille est à gérer est impliqué a été activée.

On peut alors vérifier, lors de l'opération « CHK CBB », si un identifiant de cette connexion est mémorisé dans le module de mémoire de l'équipement de communication dont la mise en veille est à gérer.

Si c'est déjà le cas, (cas « O »), cet équipement reste dans le premier état « EV / M CBB » où il est éveillé et impliqué dans M connexions actives. Si ce n'est pas le cas (cas « N »), on procède alors à l'opération « AJ CBB / M=M+1 » selon laquelle l'identifiant de la nouvelle connexion active est mémorisé dans le module de mémoire, et le nombre M de connexions actives est augmenté d'une unité. On reboucle ensuite au premier état « EV / M CBB ».

On aura compris que de manière avantageuse par rapport à l'état de l'art, l'invention permet d'éviter la mise en veille d'équipements de communication s'ils ont toujours un rôle à jouer, notamment en tant que répéteur, pour une communication active, évitant ainsi une forte latence introduite par leur réveil. Ceci s'applique aussi bien pour des équipements relais de communication, de type modem à courant porteur en ligne, qu'à des équipements terminaux de communication destinés à être impliqués dans plusieurs connexions en parallèle, comme par exemple une passerelle d'accès à internet.

Par ailleurs, à ce jour, la consommation électrique de certains équipements représente une part importante de la consommation totale du réseau local, car ils restent constamment allumés faute d'un mécanisme de mise en veille coordonné approprié. L'invention permet donc des économies substantielles dans la consommation électrique des équipements du réseau.

L'invention trouve également application dans un réseau composé de liens utilisant des technologies multiples. On connaît ainsi des modems servant à étendre la couverture par radio WiFi au sein d'un habitat. De tels équipements reçoivent les données via un lien par courant porteurs en ligne et les retransmettent via un lien WiFi. Concrètement un tel modem peut être utilisé une passerelle d'accès à Internet à plusieurs ordinateurs portables. En mettant en œuvre l'invention, le modem reste éveillé tant qu'il sert de relais de connexion vers au moins un ordinateur portable. Dès lors que tous les ordinateurs portables se mettent en mode de veille, le modem se met également en veille. Ainsi, l'invention améliore non seulement l'efficacité énergétique du réseau, mais stoppe également le rayonnement du modem WiFi dès lors qu'il n'est plus nécessaire, ce qui réduit l'exposition des personnes aux ondes électromagnétiques.

L'invention n'est en outre pas limitée au procédé tel que décrit précédemment, mais s'étend également à un équipement de communication apte à être impliqué dans une pluralité de connexions entre équipements terminaux d'un réseau de communication.

Cet équipement comprend alors un module de surveillance d'activité des connexions configuré pour, après détection qu'une desdites connexions passe d'un état actif à un état inactif, maintenir l'équipement de communication en éveil si au moins une autre des connexions susmentionnées reste dans un état actif ou, au contraire, déclencher la mise en veille de l'équipement de communication si aucune des connexions susmentionnés ne se trouve dans un état actif.

Ce module de surveillance d'activité peut être configuré pour détecter lui-même le passage à un état inactif d'une de ces connexions, en surveillant la transmission des données relatives à cette connexion pendant une période de surveillance d'activité de durée déterminée, ou alternativement peut recevoir un message d'un autre équipement du réseau lui indiquant le passage à un état inactif de cette connexion.

Un tel module de surveillance d'activité peut notamment être implémenté sous la forme d'un processeur apte à exécuter des instructions de code d'un programme d'ordinateur pour mettre en oeuvre les étapes du procédé évoqué précédemment.

Comme indiqué précédemment, un tel équipement de communication peut comporter en outre un module de mémoire apte à stocker des indications quant à l'état actif des connexions transitant par cet équipement, sous la forme d'un identifiant de chacune de ces connexions en tant que tel, voire sous la forme d'un identifiant de chacune de ces connexions associé à un identifiant de l'état d'activité de la connexion en question. Un tel module de mémoire peut ainsi prendre la forme d'une mémoire vive de type RAM associée au processeur susmentionné au sein d'une unité de traitement intégrée dans l'équipement de communication dont la mise en veille est à gérer.

L'invention concerne également un réseau de communication comprenant un ou plusieurs équipements susmentionnés. Elle vise également un programme d'ordinateur comprenant des instructions de code pour l'exécution, lorsque ce produit programme est exécuté par un processeur d'un équipement de communication, du procédé de gestion de mise en veille précédemment décrit. Elle vise encore un support d'enregistrement sur lequel est stocké un tel programme d'ordinateur.

## Revendications

1. Procédé de gestion de la mise en veille d'un équipement de communication (CPL2) impliqué dans une pluralité de connexions entre équipements terminaux (IAD, STB, PC) d'un réseau de communication, le procédé comprenant les étapes suivantes :
- détecter (EV FIN CBB) le passage d'une desdites connexions d'un état actif, dans lequel des données sont transmises au moyen de ladite connexion, à un état inactif, dans lequel aucune donnée n'est transmise au moyen de ladite connexion ;
- maintenir (EV/M CBB) l'équipement de communication en éveil si au moins une autre desdites connexions se trouve dans un état actif ;
- mettre en veille (MV) l'équipement de communication si aucune desdites connexions ne se trouve dans un état actif.

2. Procédé selon la revendication 1, comprenant en outre :
- mémoriser, dans un module de mémoire, au moins une indication qu'une desdites connexions se trouve dans un état actif ;
- vérifier (M=0 ?), suite à la détection du passage d'une desdites connexion d'un état actif à un état inactif, si le module de mémoire contient une indication qu'une autre desdites connexions se trouve dans un état actif, afin de mettre en œuvre le maintien en éveil ou la mise en veille de l'équipement de communication en fonction de la présence de ladite indication dans le module de mémoire.

3. Procédé selon la revendication 2, dans lequel l'indication qu'une desdites connexions se trouve dans un état actif comprend un identifiant de ladite connexion, le procédé comprenant, suite à la détection du passage d'une connexion d'un état actif à un état inactif, la suppression (SUP CBB) de l'identifiant de ladite connexion dans le module de mémoire.

4. Procédé selon la revendication 2, dans lequel l'indication qu'une desdites connexions se trouve dans un état actif comprend un identifiant de ladite connexion associé à un identifiant d'état de ladite connexion, le procédé comprenant, suite à la détection du passage d'une connexion d'un état actif à un état inactif, la modification de l'identifiant d'état associé à ladite connexion dans le module de mémoire.

5. Procédé selon l'une des revendications 2 à 4, dans lequel la mémorisation d'une indication qu'une desdites connexions se trouve dans un état actif fait suite à la détection (EV NOUV CBB) du passage de ladite connexion d'un état inactif à un état actif.

6. Procédé selon l'une des revendications 1 à 5, dans lequel la détection du passage d'une desdites connexions d'un état actif à un état inactif (EV FIN CBB), respectivement d'un état inactif à un état actif (EV NOUV CBB), comprend la réception d'un message de rupture de connexion, respectivement d'un message d'établissement de connexion, provenant d'un des équipements impliqués dans ladite connexion.

7. Procédé selon l'une des revendications 1 à 5, dans lequel la détection du passage d'une desdites connexions d'un état actif à un état inactif (EV FIN CBB), respectivement d'un état inactif à un état actif (EV NOUV CBB), comprend la détection de l'absence, respectivement de la présence, de transmission de données sur ladite connexion pendant une période de surveillance d'activité.

8. Procédé selon l'une des revendications 1 à 7, dans lequel la détection du passage d'une desdites connexions d'un état actif à un état inactif et/ou d'un état inactif à un état actif est réalisée par l'équipement de communication.

9. Procédé selon l'une des revendications 1 à 7, dans lequel la détection du passage d'une desdites connexions d'un état actif à un état inactif et/ou d'un état inactif à un état actif est réalisée par un équipement distant de surveillance d'activité, le procédé comprenant en outre la transmission d'un message d'instruction dudit équipement distant de surveillance d'activité vers l'équipement de communication, l'équipement de communication étant maintenu en éveil ou mis en veille en fonction dudit message d'instruction.

10. Equipement de communication (CPL2) apte à être impliqué dans une pluralité de connexions entre équipements terminaux (IAD, STB, PC) d'un réseau de communication, comprenant un module de surveillance d'activité des connexions configuré pour, après détection du passage d'une desdites connexions d'un état actif, dans lequel des données sont transmises par ladite connexion, à un état inactif, dans lequel aucune données n'est transmise par ladite connexion :
- maintenir l'équipement de communication en éveil si au moins une autre desdites connexions reste dans un état actif ;
- déclencher la mise en veille de l'équipement de communication si aucune desdites connexions ne se trouve dans un état actif.

11. Equipement de communication selon la revendication 10, dans lequel le module de surveillance d'activité des connexions est configuré en outre pour détecter le passage d'une desdites connexions d'un état actif à un état inactif.

12. Equipement de communication selon la revendication 11, comprenant en outre un module de mémoire configuré pour mémoriser au moins une indication qu'une desdites connexions se trouve dans un état actif, le module de surveillance d'activité des connexions étant configuré en outre pour vérifier (M=0 ?), suite à la détection du passage d'une desdites connexions d'un état actif à un état inactif, si le module de mémoire contient une indication qu'une autre desdites connexions se trouve dans un état actif, afin de mettre en œuvre le maintien en éveil ou la mise en veille de l'équipement de communication en fonction de la présence de ladite indication dans le module mémoire.

13. Equipement de communication selon la revendication 12, dans lequel l'indication qu'une desdites connexions se trouve dans un état actif comprend un identifiant de la connexion, le cas échéant associé à un identifiant d'état de la connexion, en particulier une liste ordonnée des identifiants des équipements appartenant à ladite connexion, dans un ordre allant d'un premier équipement dit équipement source à un deuxième équipement dit équipement destinataire.

14. Equipement de communication selon l'une des revendications 10 à 13, dans lequel le module de surveillance d'activité des connexions est apte à recevoir un message d'instruction d'un équipement distant de surveillance d'activité et configuré pour maintenir en éveil ou mettre en veille l'équipement de communication en fonction dudit message d'instruction.

15. Produit programme d'ordinateur comprenant des instructions de code pour l'exécution, lorsque ce produit programme est exécuté par un processeur d'un équipement de communication, du procédé selon l'une quelconques des revendications 1 à 9.
